# EUROPEAN PATENT APPLICATION

(11) **EP 2 083 411 A2**
(43) Date of publication of application: **29.07.2009**
(21) Application number: 09150324.3
(22) Date of filing: 09.01.2009
(51) Int. Cl.: G09B 9/08, G09B 9/12

(54) **Modular flight control structure**

(30) Priority: 09.01.2008 US 19924 P
(71) Applicant: CAE Inc., Saint-Laurent, Québec H4T 1G6 (CA)
(72) Inventor: Soodeen, Mark, Beaconsfield, Québec H9W 1H2 (CA); Goudreault, Marc, Blainville, Québec J7C 4R4 (CA)
(74) Representative: Cabinet Plasseraud

(57) **Abstract**

A flight control structure for supporting various components of a flight simulator. The flight control structure includes a plurality of elongated members, the plurality of elongated members being adapted to receive a plurality of connectors for connecting the plurality of elongated members and for mounting a plurality of components of the flight simulator. One or more of the plurality of connectors are movable and/or removable so that the flight control structure assumes a first flight simulator configuration adapted to simulate a first aircraft or a second flight simulator configuration adapted to simulate a second aircraft.

## Description

### CROSS-REFERENCE

The present application claims priority to United States Provisional Patent Application No. 61/019,924, filed January 9, 2008.

### FIELD OF INVENTION

The present invention relates generally to flight simulators and more particularly to a modular flight control structure for flight simulators.

### BACKGROUND OF THE INVENTION

Flight simulators have become more complex and more realistic. Typically, a flight simulator has been designed to simulate a specific aircraft. This requires different simulators to be designed and implemented for different aircraft. Therefore, there is a need for a flight simulator that could assume different configurations adapted to simulate different aircrafts.

### SUMMARY OF THE INVENTION

The present invention relates to a flight control structure for supporting various components of a flight simulator. The flight control structure includes elongated members which are adapted to receive connectors for connecting the elongated members and for mounting components of a flight simulator. One or more of the connectors are movable and/or removable so that the flight control structure assumes a first configuration adapted to simulate a first aircraft or a second configuration adapted to simulate a second aircraft.

In an additional aspect, the elongated members include primary elongated members and secondary elongated members. One or more of the secondary members are adapted to be connected to one or more of the primary elongated members or to another one or more of the secondary elongated members, or both.

In an additional aspect, the primary elongated members are assembled to form an internal frame structure and an external frame structure.

In an additional aspect, the external frame structure is adapted to support a cockpit of the first or the second aircraft, other components of the flight simulator, or a combination of two or more thereof.

In an additional aspect, the internal frame structure is adapted to support a floor of a cockpit of the first or the second aircraft for mounting the pilot seat.

In an additional aspect, the internal frame structure is movable relative to the external frame structure.

In an additional aspect, the internal frame structure is adapted to support a cockpit floor for mounting a pilot seat, and the internal frame structure is movable vertically relative to the external frame structure so as to adjust a height of the cockpit floor on which the pilot seat is mounted.

In an additional aspect, the primary or the secondary elongated members are adapted to mount an aircraft specific device and to mount a device generic to various aircrafts.

In an additional aspect, the aircraft specific device includes aircraft rudder pedals and the device generic to various aircrafts includes a mechanical load unit.

In an additional aspect, the primary or the secondary elongated members are arranged to provide structural rigidity in transference of loads fore, aft, and laterally through to the flight control structure.

In an additional aspect, the elongated members include parallelepiped-shaped beams.

In an additional aspect, the beams have one or more grooves running along a length of the beams.

In an additional aspect, the elongated members include grooves. The grooves are adapted to receive the connectors for connecting the elongated members and for mounting components of the flight simulator.

In an additional aspect, the flight control structure further comprises V-connectors. One or more of the elongated members is connected to another one or more of the elongated members using the V-connectors.

In an additional aspect, the V-connectors include holes adapted to receive fasteners for fastening the V-connectors to the one or more of the elongated members.

In an additional aspect, the grooves are adapted to receive plates. The plates are configured to receive fasteners for fastening the V-connectors to the elongated members.

In an additional aspect, one or more of the elongated members are adapted to receive self-locking fasteners at an end of the one or more of the elongated members.

In an additional aspect, the self-locking fasteners include a plate adapted to slide into the one or more grooves of the one or more elongated members.

In an additional aspect, the flight control structure further comprises L-connectors. The flight simulator components are adapted to be mounted on the one or more of the plurality of elongated members using the L-connectors.

In an additional aspect, the L-connectors are adapted to be mounted to the one or more elongated members using fasteners mounted in one or more grooves provided on a side of one or more of the elongated members.

In another aspect, the present invention relates to a flight simulator. The flight simulator comprises a flight control structure for supporting various components of the flight simulator. The structure includes elongated members which are adapted to receive connectors for connecting the elongated members and for mounting components of a flight simulator. One or more of the connectors are movable and/or removable so that the flight control structure assumes a first flight simulator configuration adapted to simulate a first aircraft or a second flight simulator configuration adapted to simulate a second aircraft.

In an additional aspect, the flight simulator further comprises a motion platform. The flight control structure is mounted on the motion platform.

In an additional aspect, the flight simulator further comprises a motion simulator adapted to move the motion platform.

Embodiments of the present invention each have at least one of the above-mentioned aspects, but do not necessarily have all of them. It should be understood that some aspects of the present invention that have resulted from attempting to attain the above-mentioned aspects may not satisfy these aspects and/or may satisfy other aspects not specifically recited herein.

Additional and/or alternative features, aspects, and advantages of embodiments of the present invention will become apparent from the following description, the accompanying drawings, and the appended claims.

### BRIEF DESCRIPTION OF THE DRAWINGS

FIGURE 1A is a perspective view of a flight simulator, partially broken away, according to an embodiment of the present invention;
FIGURE 1B shows an external view of a portion of a flight simulator without a cockpit of an aircraft mounted therein;
FIGURE 1C shows an external view of the portion of the flight simulator shown in FIGURE 1B with a cockpit of an aircraft mounted therein;
FIGURE 2A is a perspective view of a modular flight control structure, according to an embodiment of the present invention;
FIGURE 2B is a perspective view of a cockpit of an aircraft mounted on flight control structure, according to an embodiment of the present invention;
FIGURE 2C is a top view of a modular flight control structure showing various components mounted on the modular flight control structure, according to an embodiment of the present invention;
FIGURE 2D is a perspective view of a modular flight control structure showing flight control systems mounted on the structure flight control structure, according to an embodiment of the present invention;
FIGURE 3 shows a pair of rudder pedals, specific to aircraft model and type, linked to a load unit, generic to all aircrafts;
FIGURES 4A and 4B show three dimensional perspective views of the modular flight control structure, according to an embodiment of the present invention, in two different configurations;
FIGURES 5A and 5B show three dimensional perspective views of two different structure conformations, each being adapted for a different aircraft model, according to embodiments of the present invention;
FIGURE 6 depicts a three dimensional perspective view of four beams used in the structure depicted in FIGURES 2A-2D, and a plurality of connectors for connecting the beams, according to an embodiment of the present invention;
FIGURE 7 depicts a three dimensional perspective view of a beam, according to an embodiment of the present invention;
FIGURE 8 illustrates a threaded plate fastener being introduced into a groove provided on a side of a beam, according to an embodiment of the present invention;
FIGURE 9 shows a fastener having a protruding plate which can be placed at an end of a beam, according to an embodiment of the present invention;
FIGURE 10A-C show various phases of inserting a connector into a groove provided on a side of a beam, according to an embodiment of the present invention; and
FIGURE 11 depicts a three dimensional close-up perspective view showing mounting of a generic component to all aircraft models (shown in FIGURE 3) to the structure (shown in FIGURES 2A-2D), according to an embodiment of the present invention.

### DETAILED DESCRIPTION OF EMBODIMENTS OF THE INVENTION

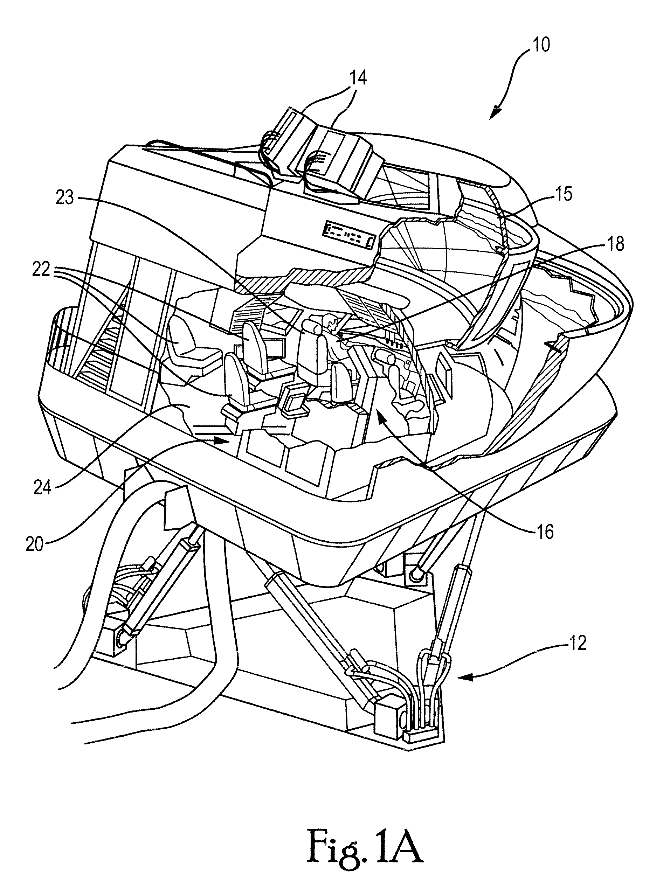

FIGURE 1A shows a flight simulator according to an embodiment of the present invention. The flight simulator 10 comprises numerous features. For example, the flight simulator may include a motion system 12 for simulating the motion of an aircraft during takeoff, flight and landing phases such as banking, turning, accelerating, and the feel of tires as they touch the runway or as they roll across bumps and cracks in the runway. The flight simulator 10 may also include a projection system 14 for projecting images on a screen 15 to reproduce the environment the aircraft appears to be flying in, including clouds, thunderstorms, the taking off from airport runaways and landing approaches to airports. In addition, sound can also be simulated to reproduce, for example, the sounds the engine makes during various phases of flight.

The flight simulator 10 further includes a cabin or a cockpit of an aircraft 16 for housing an aircrew including the pilot 18, the instructing pilot, etc. (not shown). The cabin 16 can be equipped with various flight instruments, displays, and flight controls that replicate a cockpit of the aircraft that the flight simulator is simulating. For example, the flight instruments can recreate the operational characteristics of a specific type of aircraft (e.g., a BOEING B737, an AIRBUS A320, etc.) as well as the conditions, normal or abnormal, that the pilot 18 may encounter during a simulated flight.

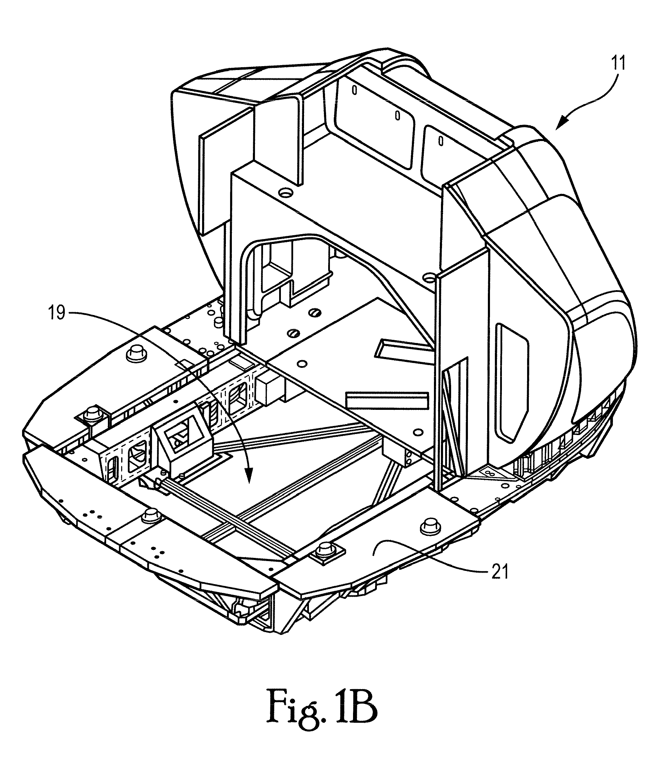

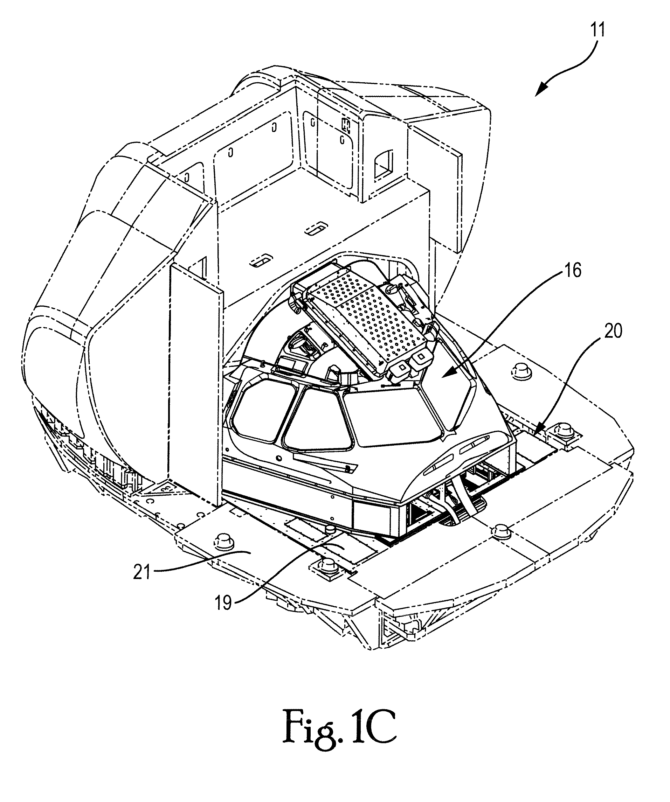

The cabin or cockpit 16 is mounted on a structure (modular flight control structure) 20 that supports this component and reinforces the structural rigidity of the motion platform 21. FIGURES 1B and 1C show an external view of a portion 11 of the simulator 10 without the cabin or cockpit 16 mounted therein and with the cabin or cockpit 16 mounted therein, respectively. As shown in FIGURE 1C, the cockpit 16 is mounted on the structure 20 which is disposed inside a cavity 19 in the motion platform 21 of the simulator 10. The structure 20 is mounted on motion platform 21 which can be moved using motion system 12.

A cockpit floor 24 having a variable thickness can be mounted on the structure 20. A pilot seat 23 can be mounted on the cockpit floor 24. In addition, seats 22 for instructors or observers can be mounted on floor 25 separate from structure 20. However, in an other embodiment, floor 25 can be mounted on the structure 20. The structure 20 can support various aircraft types and includes aircraft specific components such as aircraft rudder pedals and other support devices that are generic to all aircraft. The support devices can include, for example, mechanical load units that provide force feedback, electronic equipment that provide simulation cues, etc. The structure 20 is configurable to receive any aircraft specific device and/or any generic support device. For example, the structure 20 can be configured without a re-design to accommodate any cockpit 16 from any model of aircraft from AIRBUS corporation, any model of aircraft from BOEING corporation, any model of aircraft from BOMBARDIER corporation, any model of aircraft from EMBRAER corporation, etc. with minimal changes to the structure 20. Hence, the structure 20 is adaptive to any type of cabin or cockpit 16 from the aforementioned aircraft manufacturers or any others.

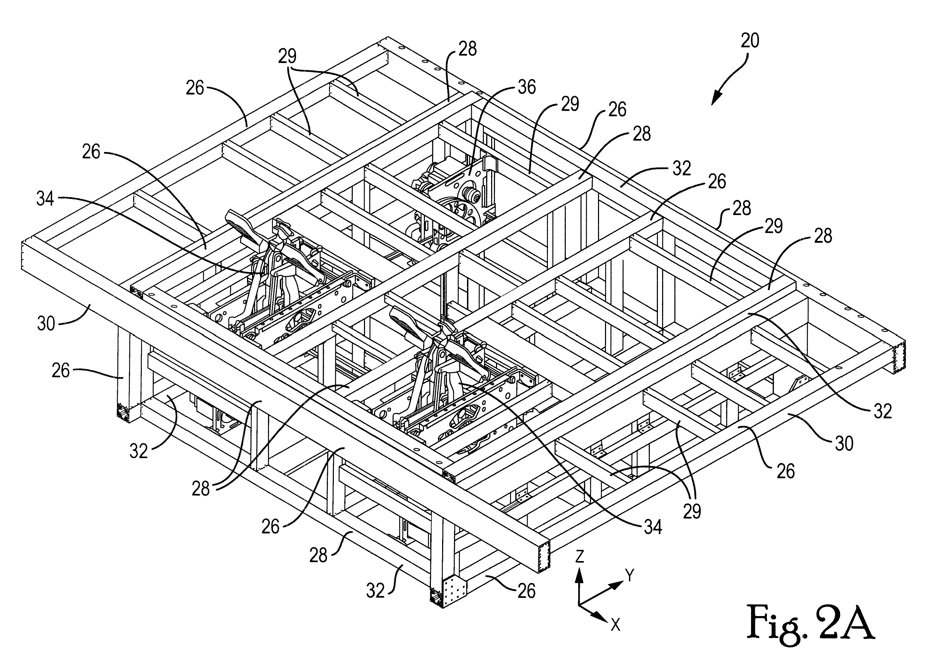

FIGURE 2A is a perspective view of the structure 20, according to an embodiment of the present invention. The structure 20 comprises a plurality of beams 26. The plurality of beams 26 include beams that are arranged parallel to the X direction, beams that are arranged parallel to the Y direction, and beams that are arranged parallel to the Z direction. However, it must be appreciated that the beams can be arranged in any spatial configuration as dictated by the cabin or cockpit 16 specifications. For example, one or more beams can also be arranged at various orientations with respect to X, Y and/or Z directions.

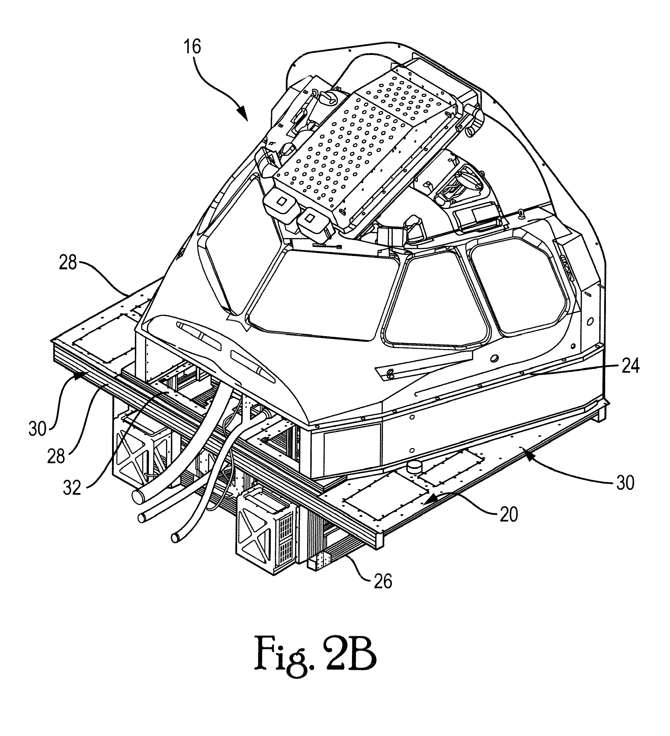

The plurality of beams 26 include a plurality of primary beams 28 and a plurality of secondary beams 29. The plurality of primary beams 28 form the skeleton of the structure 20. The primary beams 28 can be assembled to form various frames of the structure 20. For example, as shown in FIGURE 2B, the primary beams 28 can be assembled to form external frame 30 which can be used to support the cockpit floor 24, the cabin or cockpit 16 and/or other devices and components of the flight simulator 10. The primary beams 28 can also be assembled to form internal support frame 32 which can be used to support the cockpit floor 24 on which the pilot seat 23 can be mounted and/or to support other devices and components of the flight simulator 10.

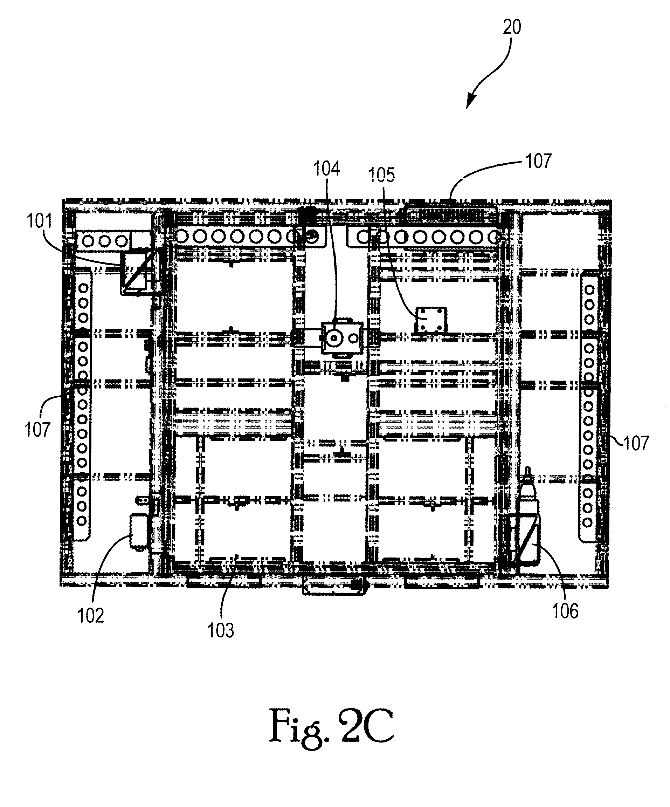

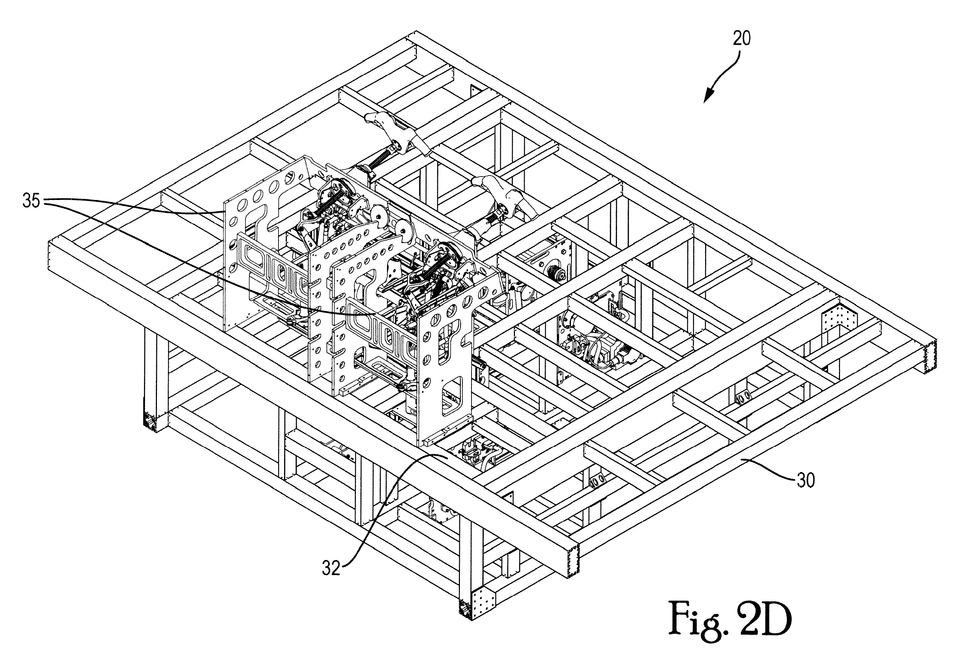

The secondary beams 29 are connected to the primary beams 28. The secondary beams 29 can be used to reinforce the frames 30 and 32 by linking two or more of the plurality of primary beams 28 or by linking one or more of the primary beams 28 to other secondary beams 29, or to create assemblies for mounting various devices or components of the flight simulator. For example, as shown in FIGURE 2A, the secondary beams 29 of the structure 20 can be used to mount aircraft specific devices 34 such as aircraft rudder pedals linkages and to mount generic components 36 such as one or more mechanical load units. For example, as shown in FIGURE 2C which depicts a top view of the structure 20 according to one embodiment of the present invention in which the flight controls are removed, various components including digital buffer unit 101 for interface of load unit 34, light boxes 102, digital interfaces and power distribution 103, speaker 104, accelerometer 105, power distribution unit and Ethernet switch interface and communication equipment 106, cable trays 107, and other support and power equipments such as A/C lines, oxygen panels, plumbing, etc., can be mounted on the structure 20. In addition, FIGURE 2D depicts a perspective view of the structure 20, according to one embodiment of the present invention, in which flight control systems 35 are mounted on the structure 20. Different configurations of flight control systems 35 can be installed on the structure 20.

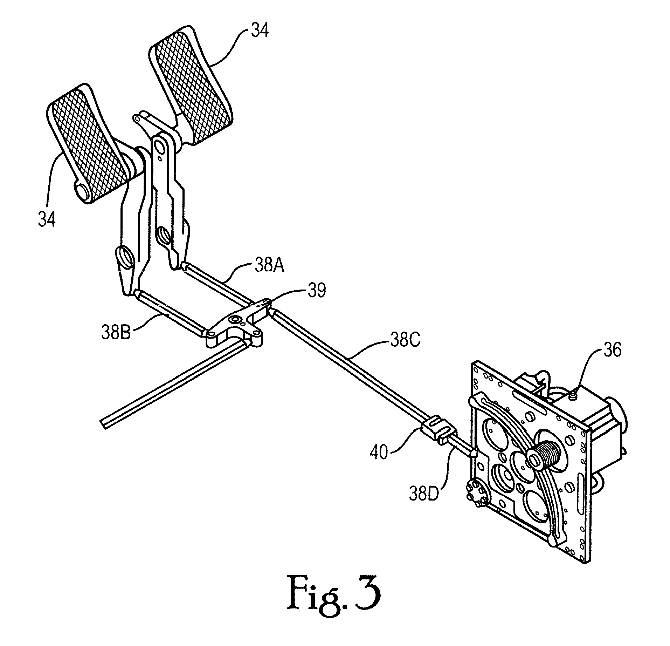

FIGURE 3 shows a pair of rudder pedals 34, which is specific to aircraft model and type, linked to load unit 36, which is generic to all aircraft. The rudder pedals 34 are linked to the load unit 36 through links 38A, 38B, 38C and 38D. The pair of links 38A and 38B connect each rudder pedal 34 to a hub link 39. The hub link 39 is in turn connected to link 38C. The link 38C is connected to link 38D through electronic force cell 40. The link 38D is in turn connected to load unit 36. One or more secondary beams 29 on which aircraft specific devices 34 (e.g., aircraft rudder pedals) are mounted can be positioned in the structure 20 so as to accommodate the aircraft specific devices 34 without having to redesign the structure 20. Specifically, while the positioning of the generic devices 36 (e.g., mechanical load units) in the structure 20 may be impacted by the aircraft type, i.e., the positioning of generic devices may be the same across various types of aircraft, the positioning of the aircraft specific device 34 (e.g., aircraft rudder pedals) can vary from one aircraft type to another. Hence, in order to provide a structure 20 that is compatible with all aircraft types and models, the various beams (e.g., primary beams 28 and/or secondary beams 29) in the structure 20 are spatially re-configurable, for example, movable, removable and/or adjustable to accommodate the positioning of the aircraft specific devices (e.g., aircraft rudder pedals). Although, the positioning of the generic devices (e.g., mechanical load units) in the various aircraft models can be the same, by providing a configurable or modular structure 20, the generic devices can optionally be moved within the structure 20 if required.

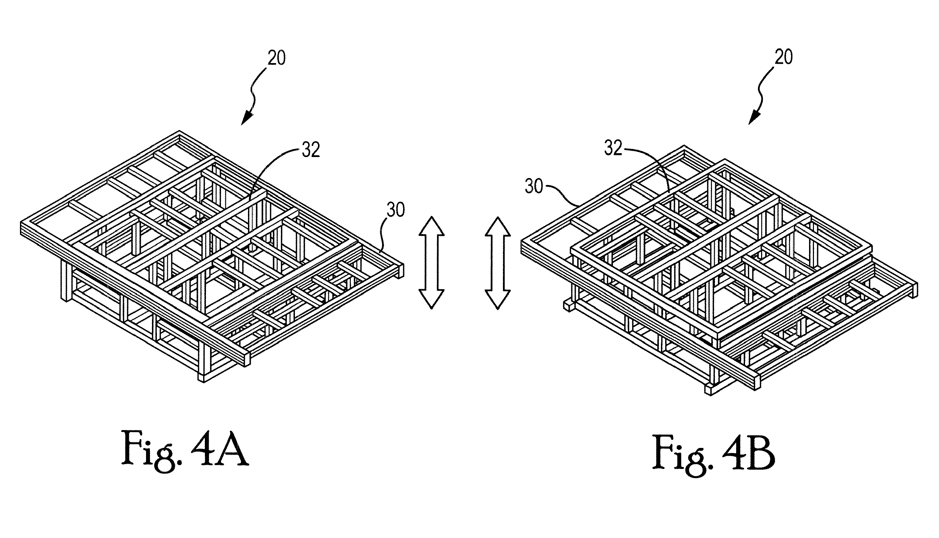

FIGURES 4A and 4B show three dimensional perspective views of the structure 20 in two different configuration. Specifically, FIGURES 4A and 4B depict a positioning of the external frame 30 relative to the internal support frame 32. The external frame 30 can move relative to the internal frame 30 as shown by the double arrow in FIGURES 4A, 4B. For example, with a structural reconfiguration of frames 30 and 32, the external frame 30 can be raised or lowered relative to the internal frame 32, or vice-versa, to provide, for example, for adjustment of the height of the platform on which the pilot seat is mounted so as to accommodate different pilot eye points without impacting the overall design of the structure 20.

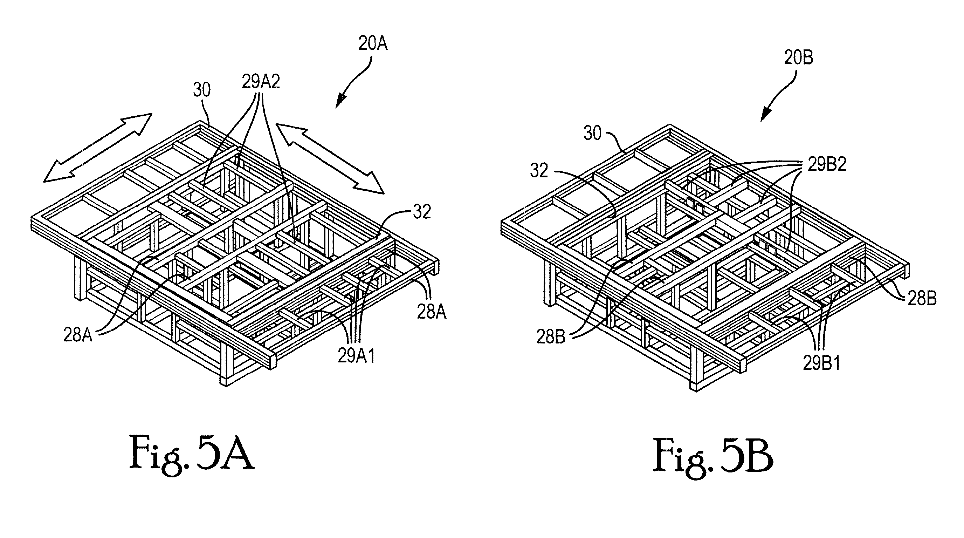

FIGURES 5A and 5B show three dimensional perspective views of two different structure conformations 20A and 20B adapted for an AIRBUS A320 and a BOEING B737, respectively, according to embodiments of the present invention. The two structure conformations 20A and 20B have the same internal frame 32 and external frame 30. However, some of the secondary beams 29 are mounted differently in the structure conformations 20A and 20B. For example, in the conformation 20A, four secondary beams 29A1 connecting two primary beams 28A are provided. Whereas, in the conformation 20B, three secondary beams 29B1, connecting two primary beams 28B are provided. Similarly, in the conformation 20A, a plurality of secondary beams 29A2 are connected to a plurality of primary beams 28A inside the internal frame 32. In the conformation 20B, a plurality of secondary beams 29B2 are connected to a plurality of primary beams 28B or to other secondary beams 29B2 inside the internal frame 32. The structural differences between the conformation 20A and the conformation 20B are reflective of the difference in configurations between two flight simulators designed to simulate two different aircraft models (e.g., Boeing B737 and Airbus A320). The structure 20 depicted above can be arranged in conformation 20A or arranged in conformation 20B by adding, removing, moving and/or adjusting one or more of the secondary beams 29, one or more of the primary beams 28, or both, to accommodate various floor configurations and control loading layouts of various models or types of aircraft (e.g., Boeing B737 and Airbus A320). In other words, the structure 20 is modular and can accommodate various components or devices of different aircraft types with various floor dimensions.

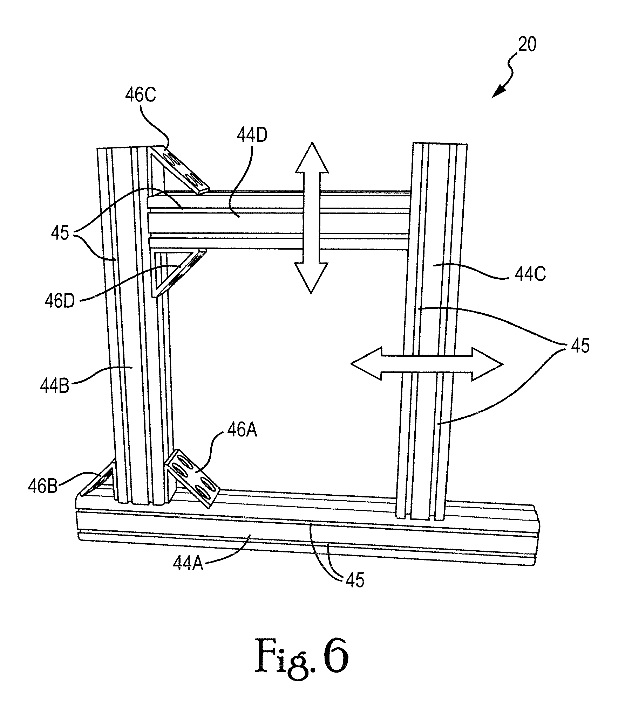

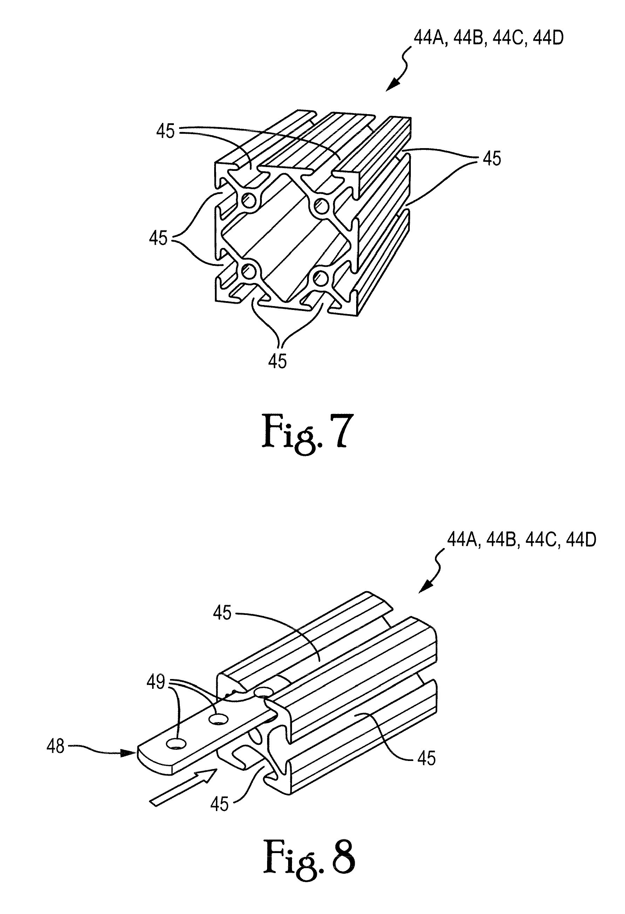

FIGURE 6 depicts a three dimensional perspective view of four beams 44A, 44B, 44C and 44D used in the structure 20 and connectors 46A, 46B, 46C and 46D for connecting the beams, according to an embodiment of the present invention. The beams 44A, 44B, 44C and 44D are parallelepiped-shaped beam. However, the beams 44A, 44B, 44C and 44D can have any shape, including, any polygonal shape or cylindrical shape. FIGURE 7 depicts a three dimensional perspective view of a beam (e.g., beam 44A, 44B, 44C or 44D), according to an embodiment of the present invention. The beams 44A, 44B, 44C and 44D are T-slotted extrusions of structurally rigid material, such as a metal (e.g., aluminum, iron, stainless steel, or the like). Each side of beams 44A, 44B, 44C and 44D is provided with one or more grooves 45. For example, as shown in FIGURE 7, two parallel grooves 45 can be provided on each side of the beam 44A, 44B, 44C and/or 44D. As shown in FIGURE 7, the grooves 45 run parallel along a length of the beam 44A, 44B, 44C, 44D. The grooves 45 have a trapezoid-like cross section. However, the grooves 45 can have any other cross-sectional shape such as, but not limited to, triangular, rectangular, square, polygonal, semi-circular, etc. As shown in FIGURE 6, the beam 44B is connected to the beam 44A using V-connectors 46A and 46B. The V-connectors 46A and 46B are connected to opposite sides of beam 44B and to one side of beam 44A. Although two V-connectors are used to connect beam 44B to beam 44A, one V-connector (e.g., V-connector 46A) may be used. Similarly, beam 44D is connected to the beam 44B using V-connectors 46C and 46D. The V-connectors 46C and 46D are connected to opposite sides of beam 44D and to one side of beam 44B. Although two V-connectors are used to connect beam 44D to beam 44B, one V-connector (e.g., V-connector 46B) may be used. The V-connectors 46A, 46B, 46C and 46D are triangular-shaped connectors which are provided with holes for receiving fasteners (not shown). The fasteners are used to fasten the V-connectors to the respective beams. The V-connectors connect the various beams at about 90° angles so as to form square/rectangular configurations. However, the V-connectors can be designed so that the angle between the various beams in the obtained configuration can be smaller or greater than 90° to form other geometrical configurations, such as triangular configurations. In one embodiment, the fasteners (e.g. screws, etc.) can be introduced through the holes in the V-connectors to attach to a threaded plate (shown in FIGURE 8).

FIGURE 8 illustrates a plate 48 being introduced into the slot or groove 45 provided on a side of the beam (e.g., 44A, 44B, 44C, 44C), according to an embodiment of the present invention. In this embodiment, the beam 44A, 44B, 44C, 44D is shown having one groove running parallel to the length of the beam 44A, 44B, 44C, 44D. However, more than one groove can also be provided on the side of the beam 44A, 44B, 44C, 44D, for example as depicted in FIGURE 7. In this embodiment, the plate 48 is shown having three threaded holes 49. However, any number of holes (e.g., one or more holes) can be used. The plate 48 can be introduced into the groove 45, for example, through an open end of the beam so as to slide through the groove 45, as depicted by the arrow in FIGURE 8. Once introduced into the groove 45, the plate 48 can receive fasteners such as screws, or the like so as the fasten connectors, such as the V-connectors 46A, 46B, 46C and 46D shown in FIGURE 6, or other connectors to connect two or more beams (e.g., beams 44A, 44B, 44C, 44D) to each other.

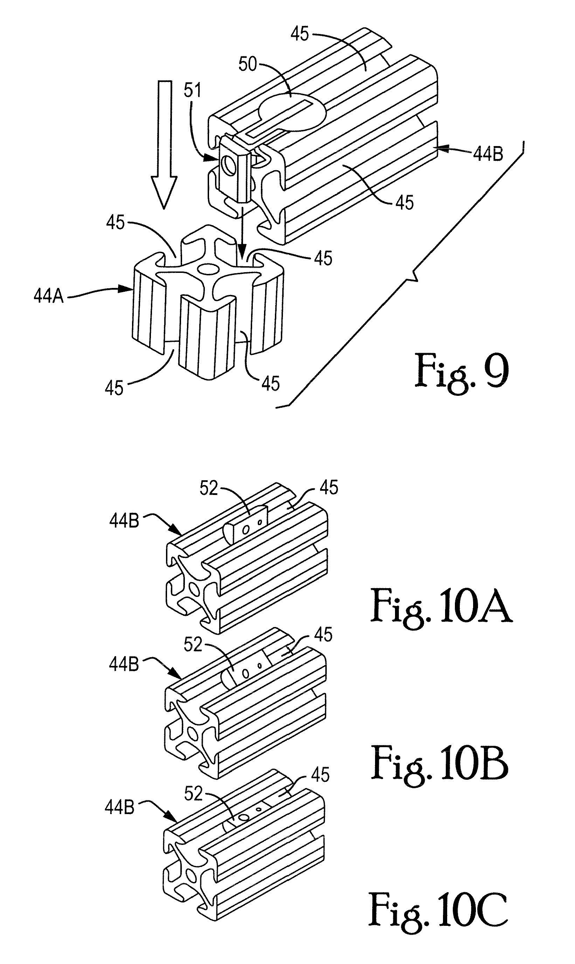

Alternatively, other types of fasteners can be used. For example, as shown in FIGURE 9, a fastener 50 having a protruding plate 51 can be placed at an end of a beam (e.g., beam 44B) so that the protruding plate 51 can slide into a groove 45 of another beam (e.g., beam 44A), as depicted by the arrow in FIGURE 9. In this way, the two beams 44A and 44B can be connected together while providing the flexibility to adjust or move the relative position of the beam 44B along a length of the beam 44A, as indicated by the arrow in FIGURE 9, as desired. In one embodiment, the fastener 50 includes a self-locking fastener. The self-locking fastener further facilitates moving, removing, or adjusting the position of one beam relative to another beam. The self-locking fastener works by tightening the built-in fastener 50 which in turn squeezes the plate 51 against the inner walls of the groove 45. The walls of groove 45 can elastically deform to create a strong friction joint. This type of fastener 50 is manufactured by 80/20®, Inc. of Columbia City, Indiana.

In another embodiment, instead of introducing a connector through an end of a beam, as depicted in FIGURE 8, a connector 52 can be introduced through the groove 45 in the manner depicted in the sequence illustrated in FIGURE 10A-C. For example, the connector 52, having a shape of a semicircular plate, can be introduced sideways through the slot or groove 45, as shown in FIGURE 10A, then rotated within the groove 45 as shown in FIGURE 10B to obtain a connector positioned in the groove 45, as shown in FIGURE 10C. In this case, even if an end of the beam is not accessible (for example another beam is connected to that end as depicted in FIGURE 6) and the connector cannot be introduced through that extremity of the beam, the connector can be introduced directly through the groove at any point along a length of the beam. This provides the flexibility to install, connect, disconnect, move, remove and/or adjust the position of beams relative to other beams in the structure. These connectors also provide mounting points for devices, equipment and components of the flight simulator within the structure 20.

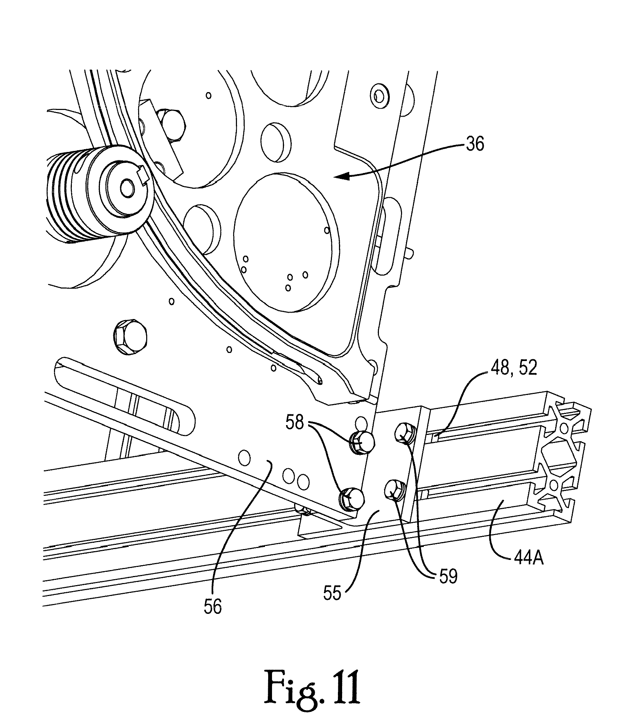

FIGURE 11 depicts a three dimensional close-up perspective view showing the mounting of the load unit (a generic component to all aircraft models) 36 (shown in FIGURE 3) to the structure 20 (shown globally in FIGURE 2 and a portion of which is shown in FIGURE 6). Specifically, the load unit 36 is mounted to, for example, the beam 44A using a L-connector 55. The L-connector 55 is mounted to a frame 56 of the load unit 36 using fasteners (e.g., screws) 58. The L-connector 55 is mounted to beam 44A using fasteners (e.g., screws) 59. The fasteners 58 are connected directly to the frame 56, for example threaded through holes provided in the frame 56 of the load unit 36. Alternatively, the fasteners 58 may not be needed if the L-connector 55 is soldered, glued or otherwise part of the frame 56 of the load unit 36. The fasteners 59 are attached to the beam 44A using any one of the connectors or fasteners, such as plates 48 and/or 52, as shown in FIGURES 8, 10A, 10B and 10C. By mounting the load unit 36 to the beam 44A using connectors 48 and/or 52, the relative position of the load unit within the structure 20 can also be changed, if so desired.

While various embodiments of the present invention have been described above, it should be understood that they have been presented by way of example, and not limitation. It will be apparent to persons skilled in the relevant art(s) that various changes in form and detail can be made therein without departing from the spirit and scope of the present invention. In fact, after reading the above description, it will be apparent to one skilled in the relevant art(s) how to implement the invention in alternative embodiments. Thus, the present invention should not be limited by any of the above-described exemplary embodiments.

For example, although the modular flight structure described above uses a plurality of beams having a parallelepiped shape, beams having other shapes such as, but not limited to, cylindrical or tubular shapes can also be used.

Moreover, the structure and apparatus and devices of the present invention, like related structures and apparatuses and devices used in flight simulation arts are complex in nature, are often best practiced by empirically determining the appropriate values of the operating parameters, or by conducting computer simulations to arrive at best design for a given application. Accordingly, all suitable modifications, combinations and equivalents should be considered as falling within the spirit and scope of the invention.

In addition, it should be understood that the figures, are presented for example purposes only. The architecture of the present invention is sufficiently flexible and configurable, such that it may be utilized in ways other than that shown in the accompanying figures.

## Claims

1. A flight control structure for supporting various components of a flight simulator, comprising:
a plurality of elongated members, the plurality of elongated members being adapted to receive a plurality of connectors for connecting the plurality of elongated members and for mounting a plurality of components of a flight simulator,
wherein one or more of the plurality of connectors are movable and/or removable so that the flight control structure assumes a first flight simulator configuration adapted to simulate a first aircraft or a second flight simulator configuration adapted to simulate a second aircraft.

2. The flight control structure of claim 1, wherein the plurality of elongated members include a plurality of primary elongated members and a plurality of secondary elongated members, wherein one or more of the plurality of the secondary members are adapted to be connected to one or more of the plurality of primary elongated members or to another one or more of the secondary elongated members, or both.

3. The flight control structure of claim 2, wherein the plurality of primary elongated members are assembled to form an internal frame structure and an external frame structure.

4. The flight control structure of claim 3, wherein the external frame structure is adapted to support a cockpit of the first or the second aircraft, other components of the flight simulator, or a combination of two or more thereof.

5. The flight control structure of claim 3 or 4, wherein the internal frame structure is adapted to support a floor of a cockpit of the first or the second aircraft for mounting the pilot seat.

6. The flight control structure of any one of claims 3 to 5, wherein the internal frame structure is movable relative to the external frame structure.

7. The flight control structure of claim 3 or 4, wherein the internal frame structure is adapted to support a cockpit floor for mounting a pilot seat, and the internal frame structure is movable vertically relative to the external frame structure so as to adjust a height of the cockpit floor on which the pilot seat is mounted.

8. The flight control structure of any one of claims 2 to 7, wherein the primary or the secondary elongated members are adapted to mount an aircraft specific device and to mount a device generic to various aircrafts.

9. The flight control structure of any of claims 2 to 8, wherein the primary or the secondary elongated members are arranged to provide structural rigidity in transference of loads fore, aft, and laterally through to the flight control structure.

10. The flight control structure of any one of claims 1 to 9, wherein the plurality of elongated members include grooves, the grooves being adapted to receive the plurality of connectors for connecting the plurality of elongated members and for mounting a plurality of components of the flight simulator.

11. The flight control structure of claim 10, further comprising V-connectors, wherein one or more of the plurality of elongated members is connected to another one or more of the plurality of elongated members using the V-connectors.

12. The flight control structure of claim 10, wherein one or more of the elongated members are adapted to receive self-locking fasteners at an end of the one or more of the elongated members.

13. The flight control structure of claim 10, further comprising L-connectors, wherein the flight simulator components are adapted to be mounted on the one or more of the plurality of elongated members using the L-connectors.

14. A flight simulator comprising:
a flight control structure for supporting various components of the flight simulator, the structure including:
a plurality of elongated members, the plurality of elongated members being adapted to receive a plurality of connectors for connecting the plurality of elongated members and for mounting a plurality of components of a flight simulator,
wherein one or more of the plurality of connectors are movable and/or removable so that the flight control structure assumes a first flight simulator configuration adapted to simulate a first aircraft or a second flight simulator configuration adapted to simulate a second aircraft.

15. The flight simulator of claim 14, further comprising a motion platform and a motion simulator, wherein the flight control structure is mounted on the motion platform and the motion simulator is adapted to move the motion platform.
